# EUROPÄISCHE PATENTSCHRIFT

(11) **EP 0 527 360 B1**
(45) Veröffentlichungstag und Bekanntmachung des Hinweises auf die Patenterteilung: **08.11.1995**
(21) Anmeldenummer: 92112437.6
(22) Anmeldetag: 21.07.1992
(51) Int. Cl.: H03D 7/12, H04B 1/40

(54) **Integrierter Frequenzsynthesizer-Schaltkreis für Sende- und Empfangsbetrieb**
Integrated frequency synthesizer for use in transmission/reception
Synthétiseur de fréquence réalisé en circuit intégré pour utilisation en émission/réception

(30) Priorität: 14.08.1991 DE 4126915
(43) Veröffentlichungstag der Anmeldung: 17.02.1993
(73) Patentinhaber: SIEMENS AKTIENGESELLSCHAFT, 80333 München (DE)
(72) Erfinder: Fenk, Josef, Dipl.-Ing., W-8057 Ottenburg (DE); Thomas, Volker, Dipl.-Ing., W-8000 München 40 (DE)

(56) Entgegenhaltungen:
- JAPAN TELECOMMUNICATIONS REVIEW Bd. 24, Nr. 2, April 1982, TOKYO, JP Seiten 148 - 156 TAKAAKI KIKUCHI ET AL. 'Improved Land Mobile Telephone Equipment'
- ELECTRONICS Bd. 49, Nr. 21, 14. Oktober 1976, NEW YORK, US Seiten 32 - 34 'Single chip has a-m transceiver'

## Beschreibung

Die Erfindung betrifft einen integrierten Frequenzsynthesizer-Schaltkreis für Sende- und Empfangsbetrieb.

Bei modernen Sender- und Empfängeranordnungen in der Mobilfunktechnik werden überwiegend Frequenzsynthesizerschaltungen zur Erzeugung der für die jeweiligen Frequenzumsetzungen notwendigen Mischsignale verwendet. Dabei sind die Anforderungen an diese Schaltungen abhängig vom jeweiligen Anwendungsfall sehr unterschiedlich, teilweise sogar gegensätzlich. Auf jeden Fall sollten aber die räumlichen Abmessungen möglichst klein gehalten werden. Dies wird vor allem durch Integration möglichst vieler Schaltungsteile in einen integrierten Schaltkreis erreicht.

Ein derartiger Schaltkreis ist aus "Japan Telecommunications Review" Band 24, Nr. 2, Seite 148-156, April 1982, Tokyo, bekannt.

Allerdings sollte der Schaltkreis wiederum sehr vielseitig einsetzbar sein und dabei wenig Redundanz aufweisen, um eine hohe Wirtschaftlichkeit zu erzielen. Darüber hinaus wird eine hohe Genauigkeit bei Anwendungen in stationären Anordnungen gefordert, wobei die Leistungsaufnahme eine geringere Rolle spielt, während bei Anwendungen in mobilen Anordnungen eine geringe Leistungsaufnahme bei Inkaufnahme einer geringeren Genauigkeit angestrebt wird.

Der Erfindung liegt die Aufgabe zugrunde, einen integrierten Frequenzsynthesizer-Schaltkreis für Sende- und Empfangsbetrieb anzugeben, der die obengenannten Anforderungen erfüllt.

Die Aufgabe wird durch einen integrierten Frequenzsynthesizer-Schaltkreis gemäß Patentanspruch 1 gelöst. Ausgestaltungen und Weiterbildungen des Erfindungsgedankens sind Gegenstand von Unteransprüchen.

Die Erfindung wird nachfolgend anhand des in den beiden Figuren der Zeichnung dargestellten Ausführungsbeispiels näher erläutert. Es zeigt:
- Figur 1: ein allgemeines Ausführungsbeispiel eines erfindungsgemäßen Schaltkreises in einer Anwendungsschaltung und
- Figur 2: eine bevorzugte Ausführungsform einer Verstärker-Mischerstufe bei einem erfindungsgemäßen Schaltkreis.

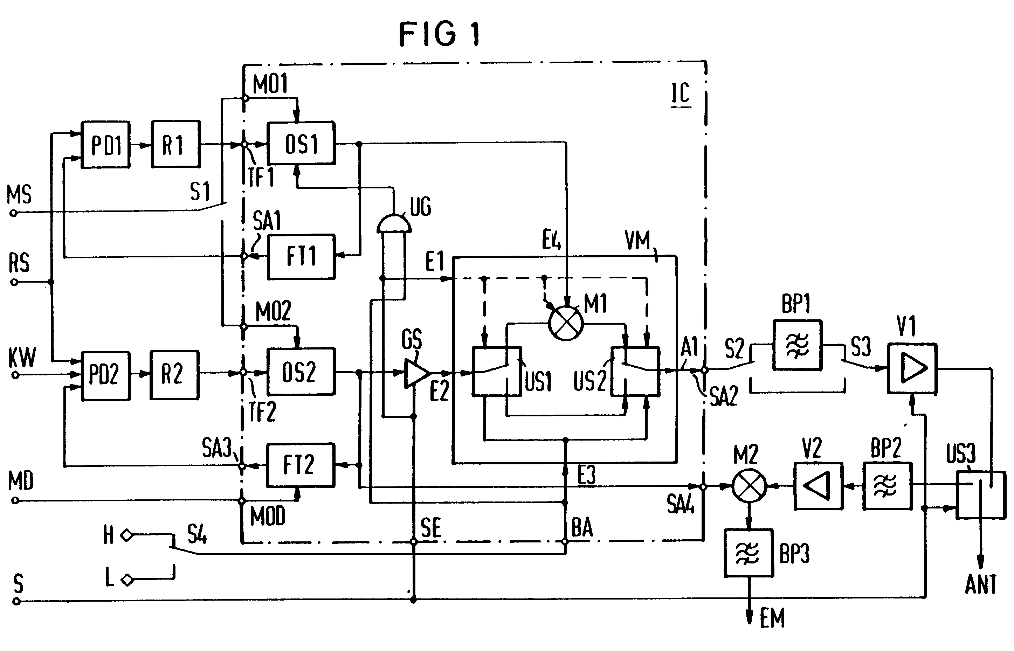

Der in Figur 1 dargestellte integrierte Schaltkreis IC enthält erfindungsgemäß zwei Oszillatoren OS1 und OS2, deren jeweils an einem Signalausgang anliegenden Ausgangssignale mittels entsprechender Signale an jeweils einem Frequenzsteuereingang und einem Modulationseingang in der Frequenz veränderbar sind. Darüber hinaus kann der Oszillator OS1 mittels eines an einem zusätzlichen Schalteingang anliegenden Signals abgeschaltet werden. Weiterhin ist ein steuerbarer Schalter GS vorgesehen, dessen Signaleingang mit dem Signalausgang des Oszillators OS2 verbunden ist. Ein derartiger steuerbarer Schalter kann beispielsweise durch eine abschaltbare Treiberstufe realisiert werden.

Der Ausgang des steuerbaren Schalters GS ist auf einen Signaleingang eines steuerbaren Umschalters US1 geführt, bei dem ein Signalausgang auf einen Signaleingang eines Modulators M1 gelegt ist und dessen anderer Signalausgang mit einem Signaleingang eines steuerbaren Umschalters US2 verbunden ist. Der andere Signaleingang des Modulators M1 ist mit dem Signalausgang des Oszillators OS1 gekoppelt, während der Signalausgang des Modulators M1 auf den anderen Signaleingang des steuerbaren Umschalters US2 geführt ist. Die Steuereingänge der steuerbaren Umschalter US1 und US2 sind zusammen geführt und an einen Steueranschluß BA angeschlossen. Außerdem ist ein Steueranschluß SE vorgesehen, der mit Steuereingängen des steuerbaren Schalters GS des Oszillators OS2, des Modulators M1 sowie der steuerbaren Umschalter US1 und US2 verbunden ist. Ein Steueranschluß MOD ist mit dem Steuereingang eines Frequenzteilers FT2 verschaltet, dessen Signaleingang an dem Signalausgang des Oszillators OS2 angeschlossen ist. Mittels eines an den Steueranschluß MOD angelegten Signals kann das Teilerverhältnis des Frequenzteilers FT2 veränder bzw. umgeschaltet werden. Außerden Steueranschlüssen SE, MOD und BA weist der integrierte Schaltkreis IC Signaleingangsanschlüsse MO1, MO2 und Signaleingangsanschlüsse TF1, TF2 auf, die jeweils mit den Modulationseingängen mit den Frquenzsteuereingängen der beiden Oszillatoren OS1 und OS2 verbunden sind. Anstelle der Signaleingangsanschlüsse MO1, MO2, TF1, TF2 bei der gezeigten Ausführungsform können die Oszillatoren OS1 und OS2 auch mit einer Abstimmung außerhalb des integrierten Schaltkreises IC versehen werden, wie beispielsweise durch einen Schwingkreis mit Kapazitätsdiode, die mit den jeweils entsprechenden Signalen angesteuert wird. Zudem sind Signalausgangsanschlüsse SA1 bis SA4 vorgesehen, von denen die Signalausgangsanschlüsse SA2 bis SA4 jeweils mit den Signalausgängen des Umschalters US2 des Frequenzteilers FT2 und des Oszillators OS2 gekoppelt sind. Der Signalausgang SA1 ist, die Erfindung ausgestaltend, über einen Frequenzteiler FT1 mit dem Ausgang des Oszillators OS1 verbunden. Die integrierte Schaltung IC kann darüber hinaus weitere nicht näher dargestellte Schaltungsteile, die ihrerseits entsprechende Anschlüsse aufweisen, enthalten.

Das gezeigte Ausführungsbeispiel zeigt im weiteren die Schaltung eines erfindungsgemäßen integrierten Schaltkreises IC bei einer sowohl stationär als auch mobil einsetzbaren Sender- und Empfängeranordnung. Dabei sind die Signaleingangsanschlüsse MO1 und MO2 jeweils an einem Signalausgang eines Umschalters S1 angeschlossen, dessen Signaleingang mit einem Modulationssignal MS beaufschlagt ist. Die Signaleingangsanschlüsse TF1 und TF2 sind jeweils mit dem Signalausgang eines Reglers R1 bzw. R2 verbunden, die ihrerseits jeweils einem Phasendetektor PD1 bzw. PD2 nachgeschaltet sind. An die miteinander verbundenen Referenzsignaleingänge beider Phasendetektoren PD1 und PD2 ist ein Referenzsignal RS gelegt. Der Signaleingang des Phasendetektors PD1 ist dabei an den Signalausgangsanschluß SA1 und der Signaleingang des Phasendetektors PD2 ist an den Signalausgangsanschluß SA3 des integrierten Schaltkreises IC angeschlossen. An einen Steuereingang des Phasendetektors PD2 ist ein Steuersignal KW angelegt, mit dessen Hilfe ein internes Teilerverhältnis des Phasendetektors PD2 beispielsweise zur Kanalwahl oder zur Umschaltung des steuerbaren Oszillators OS2 bei Empfangsbetrieb eingestellt werden kann.

An den Signalausgangsanschluß SA2 des integrierten Schaltkreises IC ist der Signaleingang eines Umschalters S2 angeschlossen. Ein Signalausgang des Umschalters S2 ist direkt mit einem Signaleingang eines Umschalters S3 verbunden, während der andere Signalausgang des Umschalters S2 unter Zwischenschaltung eines Bandpasses BP1 an den anderen Signaleingang des Umschalters S3 geführt ist. Dem Umschalter S3 ist ein Verstärker V1 nachgeschaltet, dessen Ausgang auf einen Signaleingang eines gesteuerten Umschalters US3 gelegt ist. Ein Signalausgang des gesteuerten Umschalters US3 ist mit dem Eingang eines Bandpasses BP2 verbunden, während an einem Signalein-/ausgang beispielsweise eine Antenne ANT angeschlossen ist. Dem Bandpaß BP2 ist ein Verstärker V2 nachgeschaltet, dessen Ausgang auf einen Eingang eines Modulators M2 geführt ist. Dessen anderer Signaleingang ist mit dem Signalausgangsanschluß SA4 des integrierten Schaltkreises IC verbunden. Über einem Bandpaß BP3 ist der Ausgang des Modulators M2 mit einer, nicht näher dargestellten Empfangseinrichtung EM, die beispielsweise Begrenzer und Demodulatoreneinheit, gekoppelt.

Der Steueranschluß SE des integrierten Schaltkreises IC ist mit einem Schalteingang des Verstärkers V1 und einem Steuereingang des gesteuerten Umschalters US3 verschaltet und mit einem Sendebetriebsartsteuersignal S beaufschlagt. Der Steueranschluß BA des integrierten Schaltkreises IC ist mit einem Signalausgang eines Umschalters S4 verbunden, an dessen Signaleingängen jeweils Low- und High-Pegel entsprechende Signale L und H anliegen.

Es sind zwei verschiedene Optionen vorgesehen. Bei Option 1 ist, wie gezeigt, das Modulationssignal MS mittels des Umschalters S1 auf den Signaleingangsanschluß MO1 des integrierten Schaltkreises IC, der signalausgangsanschluß SA2 mittels des Umschalters S2 auf den Bandpaß BP1 und entsprechend der Ausgang des Bandpasses BP1 mittels des Umschalters S3 auf den Verstärker V1 aufgeschaltet. Innerhalb des integrierten Schaltkreises IC ist der Ausgang des gesteuerten Schalters GS mittels das gesteuerten Umschalters US1 zum Modulator M1 und dessen Ausgang mittels des gesteuerten Umschalters US2 zum Signalausgangsanschluß SA2 durchgeschaltet. Mittels des Umschalters S4 ist dabei beispielsweise High-Pegel H an den Steueranschluß BA gelegt. Bei Option 2 sind entsprechend die Stellung der Umschalter S1, S2, S3 und S4 sowie gesteuerten Umschalter US1 und US2 jeweils entgegengesetzt.

Schließlich ist in Weiterbildung der Erfindung dem Schalteingang des Oszillators OS1 ein UND-Gatter UG vorgeschaltet. Dessen einer Eingang ist mit den Schalteingängen von gesteuertem Schalter GS, gesteuerten Umschaltern (US1, US2), Modulator (M1) und damit mit dem Steueranschluß SE verbunden. Der andere Eingang ist mit den Steuereingängen der beiden gesteuerten Umschaltern US1 und US2 gekoppelt, die ihrerseits an dem Steueranschluß BA angeschlossen sind.

Im Sendebetrieb sind im integrierten Schaltkreis IC grundsätzlich der gesteuerte Schalter GS geschlossen sowie der Oszillator OS1, die gesteuerten Umschalter US1, US2 und der Modulator M1 eingeschaltet, d. h. aktiviert. Im Empfangsbetrieb dagegen sind diese Schaltungsteile abgeschaltet. Bei Option 1 setzt sich die Frequenz des zu sendenden Signals aus der Frequenz beider Oszillatoren OS1 und OS2 zusammen, während bei Option 2 nur der Oszillator OS2 das zu sendende Sginal liefert und der Oszillator OS1 abgeschaltet ist. Hierbei besteht auch die Möglichkeit den Oszillator OS1 abzuschalten, beispielsweise dadurch, daß die Steueranschlüsse SE und BA mittels einer UND-Gatters verknüpft werden und dessen Ausgang an dem Schalteingang des Oszillators OS1 gelegt wird. Im Empfangsbetrieb wird beiden Optionen nur das Signal des Oszillators OS2 zur Zwischenfrequenzbildung verwendet. Bei Option 1 ist jedoch keine Umschaltung des Oszillators OS2 zwischen Sende- und Empfangsbetrieb wie bei Option 2 notwendig. Option 1 ist für Fälle vorgesehen, bei denen eine höhere Genauigkeit gefordert ist, wie beispielsweise beim stationären Betriebsfall, während bei Option 2 ein stromarmer Betrieb bei Einsparung eines Bandpassfilters (Bandpassfilter BP1), wie beispielsweise für den mobilen Einsatz geeignet, erzielt wird. Neben der im Ausführungsbeispiel gezeigten Ausführungsform mit den Umschaltern S1 bis S4 können je nach Anwendungsfall selbstverständlich stattdessen auch jeweils fest verdrahtete Verbindungen vorgesehen werden.

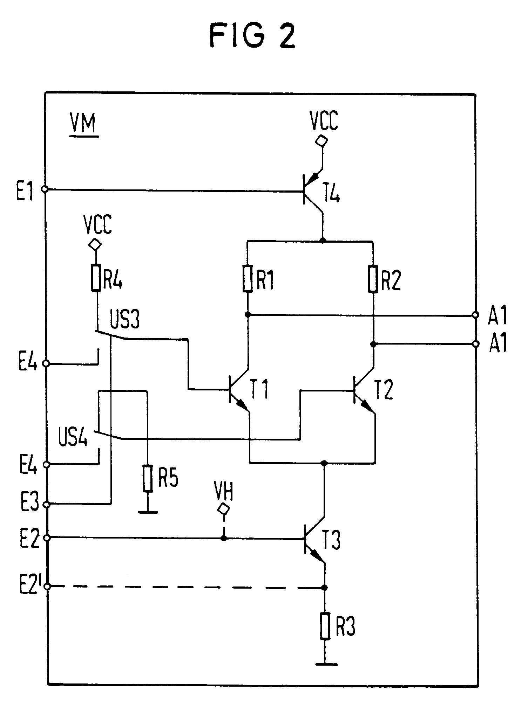

Die gesteuerten Umschalter US1 und US2 sowie der Modulator M1 aus Figur 1 sind zu einem Schaltungsblock VM zusammengefaßt, der Eingänge E1 bis E4 und einen Ausgang A1 aufweist. Die Eingänge E4 und E2 entsprechen dabei jeweils den Signaleingängen von steuerbarem Umschalter US1 und Modulator M1, der Eingang E3 entspricht den gekoppelten Steuereingängen der beiden steuerbaren Umschalter US1 und US2 und der Eingang E1 den gekoppelten Abschalteingängen der gesteuerten Umschalter US1 und US2 und des Modulators M1. Der Ausgang A1 ist mit dem Signalausgang des gesteuerten Umschalters US2 gleichzusetzen. Eine bevorzugte Ausführungsform eines Schaltungsblocks VM als kombinierte Verstärker/Mischer zeigt Figur 2.

Der Schaltungsblock VM nach Figur 2 enthält zwei npn-Transistoren T1 und T2, deren miteinander gekoppelte Emitter über die Kollektor-Emitter-Strecke eines npn-Transistors T3 und einem Widerstand R3 in Reihe mit einem Bezugspotential verbunden sind. Die Basis des Transistors T3 ist als Eingang E2 vorgesehen. Alternativ kann aber auch der Emitter des Transistors T3 als Eingang E2′ verwendet werden. Die Basis liegt dabei dann auf einem Hilfspotential VH. Die Kollektoren der Transistoren T1 und T2, die den differentiellen Ausgang A1 bilden, sind jeweils über einen Widerstand R1 bzw. R2 mitein ander gekoppelt und über die Kollektor-Emitter-Strecke eines pnp-Transistors T4 mit einem Versorgungspotential VCC verbunden. Die Basis des Transistors T4 ist als Eingang E1, also als Abschalteingang, vorgesehen. Die Basen der Transistoren T1 und T2 sind alternativ mittels zweier gesteuerter Umschalter US3 und US4 auf den differentiellen Eingang E4 oder über Widerstände R4 und R5 auf das Versorgungspotential bzw. Bezugspotential aufschaltbar. Die Steuerung der Umschalter US3 und US4 erfolgt durch entsprechende Signale am Eingang E3.

Bei der gezeigten Ausführungsform sind Schaltungsvariationen beispielsweise dahingehend möglich, daß Eingang E4 bzw. Ausgang A1 statt symmetrisch jeweils unsymmetrisch ausgelegt werden, daß die Signaleinspeisung beim Transistor T3 nicht an der Basis sondern am Emitter erfolgt und daß die Eingänge E2 und E4 vertauscht werden. Außerdem kann auf die Widerstände R1 und R2 sowie den Transistor T4 gegebenenfalls auch verzichtet und sogenannte Open-Collector-Ausgänge vorgesehen werden, wenn die Stromversorgung beispielsweise über externe Induktivitäten erfolgen soll und das An- und Abschalten beispielsweise über externe Elemente oder die interne Stromquelle mit dem Transistor 13 und dem Widerstand 23 vorgenommen wird.

## Patentansprüche

1. Integrierter Schaltkreis (IC)
mit einem ersten Oszillator (OS1), der einen Frequenzsteuereingang, einen Modulationseingang, einen Schalteingang und einen Signalausgang aufweist,
mit einem zweiten Oszillator (OS2), der einen Frequenzsteuereingang, einen Modulationseingang und einen Signalausgang aufweist,
mit einem steuerbaren Schalter (GS), dessen Signaleingang mit dem Signalausgang des zweiten Oszillators (OS2) verbunden ist und der einen Steuereingang aufweist,
mit einem Modulator (M1), dessen zwei Signaleingänge jeweils mit den Signalausgängen von erstem Oszillator (OS1) und steuerbarem Schalter (GS) gekoppelt sind,
mit einem steuerbaren Umschalter (US2), dessen zwei Signaleingänge jeweils mit den Signalausgängen von Modulator (M1) und steuerbarem Schalter (GS) verbunden sind und der einen Steuereingang aufweist,
mit einem steuerbaren Frequenzteiler (FT2), dessen Signaleingang mit dem Signalausgang des zweiten Oszillators (OS2) verbunden ist und der einen Steuereingang zur Änderung des Teilerverhältnisses aufweist,
mit Signaleingangsanschlüssen (MO1, MO2, TF1, TF2) von denen zwei (MO1, MO2) jeweils mit den Modulationseingängen und zwei (TF1, TF2) jeweils mit den Frequenzsteuereingängen der beiden Oszillatoren (OS1, OS2) verbunden sind,
mit Signalausgangsanschlussen (SA1, bis SA4), von denen jeweils einer mit den Signalausgängen des ersten Oszillators (OS1), des steuerbaren Umschalters (US2) des Frequenzteilers (FT2) und des zweiten Oszillators (OS2) verbunden ist und mit Steueranschlüssen (MOD, SE, BA), von denen einer (MOD) mit dem Steuereingang des Frequenzteilers (FT2) zur Änderung des Teilerverhältnisses, einer (SE) mit dem Steuereingang des steuerbaren Schalters (GS) und dem Schalteingang des ersten Oszillators (OS1) und einer (BA) mit dem Steuereingang des steuerbaren Umschalters (US2) verbunden ist.

2. Integrierter Schaltkreis nach Anspruch 1,
**dadurch gekennzeichnet**, daß dem Schalteingang des ersten Oszillators (OS1) ein UND-Gatter (UG) vorgeschaltet ist, dessen einer Eingang mit dem Steuereingang von gesteuertem Schalter (GS), und dessen anderer Eingang mit dem Steuereingang des gesteuerten Umschalters (US2) verbunden ist.

3. Integrierter Schaltkreis nach Anspruch 1 oder 2,
**gekennzeichnet durch** einen weiteren steuerbaren Umschalter (US1), dessen Signaleingang mit dem Signalausgang des steuerbaren Schalters (GS) gekoppelt ist, dessen Signalausgänge jeweils mit einem Signaleingang des Modulators (M1) und dem Signaleingang des bereits vorhandenen steuerbaren Umschalters (US2) verbunden sind und dessen Steuereingang mit dem Steuereingang des bereits vorhandenen steuerbaren Umschalters (US2) verschaltet ist.

4. Integrierter Schaltkreis nach Anspruch 3,
**dadurch gekennzeichnet**, daß der Modulator (M1) sowie die beiden steuerbaren Umschalter (US1, US2) Schalteingänge aufweisen, die dem Schalteingang des ersten Oszillators (OS1) parallel geschaltet sind.

5. Integrierter Schaltkreis nach Anspruch 3,
**dadurch gekennzeichnet**, daß Modulator (M1) und gesteuerte Umschalter (US1; US2) durch einen Schaltungsblock (VM) ersetzt werden, der zwei aus einer steuerbaren Stromquelle (R3, T3) gespeiste, emittergekoppelte Transistoren (T1, T2) aufweist,
daß die Kollektoren der Transistoren (T1, T2) unter Zwischenschaltung jeweils eines Widerstandes (R1, R2) miteinander verbunden und über ein gemeinsames steuerbares Schaltelement (T4) auf ein Versorgungspotential (VCC) aufschaltbar sind, daß auf die Basen der Transistoren (T1, T2) über jeweils einen weiteren steuerbaren Umschalter (US3, US4) ein Versorgungs- bzw. Bezugspotential oder ein Eingangssignal aufschaltbar ist.

## Claims

1. Integrated circuit (IC) comprising a first oscillator (OS1) which has a frequency control input, a modulation input, a switch input and a signal output, a second oscillator (OS2) which has a frequency control input, a modulation input and a signal output, a controllable switch (GS) whose signal input is connected to the signal output of the second oscillator (OS2) and which has a control input, a modulator (M1) whose two signal inputs are respectively coupled to the signal outputs of the first oscillator (OS1) and of the controllable switch (GS), a controllable changeover switch (US2) whose two signal inputs are respectively connected to the signal outputs of the modulator (M1) and the controllable switch (GS) and which has a control input, a controllable frequency divider (FT2) whose signal input is connected to the signal output of the second oscillator (OS2) and which has a control input for varying the divider ratio, signal input terminals (MO1, MO2, TF1, TF2) of which two (MO1, MO2) are respectively connected to the modulation inputs and two (TF1, TF2) are respectively connected to the frequency control inputs of the two oscillators (OS1, OS2), signal output terminals (SA1 to SA4) of which respectively one is connected to the signal outputs of the first oscillator (OS1), of the controllable changeover switch (US2) of the frequency divider (FT2) and of the second oscillator (OS2), and control terminals (MOD, SE, BA) of which one (MOD) is connected to the control input of the frequency divider (FT2) for the purpose of varying the divider ratio, one (SE) is connected to the control input of the controllable switch (GS) and the switch input of the first oscillator (OS1) and one (BA) is connected to the control input of the controllable changeover switch (US2).

2. Integrated circuit according to Claim 1, characterized in that there is connected upstream of the switch input of the first oscillator (OS1) an AND gate (UG) whose one input is connected to the control input of a controlled switch (GS) and whose other input is connected to the control input of the controlled changeover switch (US2).

3. Integrated circuit according to Claim 1 or 2, characterized by a further controllable changeover switch (US1), whose signal input is coupled to the signal output of the controllable switch (GS), whose signal outputs are respectively connected to a signal input of the modulator (M1) and to the signal input of the already present controllable changeover switch (US2), and whose control input is connected to the control input of the already present controllable changeover switch (US2).

4. Integrated circuit according to Claim 3, characterized in that the modulator (M1) and the two controllable changeover switches (US1, US2) have switch inputs which are connected in parallel with the switch input of the first oscillator (OS1).

5. Integrated circuit according to Claim 3, characterized in that the modulator (M1) and controlled changeover switch (US1; US2) are replaced by a circuit block (VM) which has two emitter-coupled transistors (T1, T2) fed from a controllable current source (R3, T3), in that the collectors of the transistors (T1, T2) are connected to one another with the respective interposition of a resistor (R1, R2) and can be connected to a supply potential (VCC) via a common controllable switch element (T4), and in that a supply potential or reference potential or an input signal can be connected to the bases of the transistors (T1, T2) via a respective further controllable changeover switch (US3, US4).

## Revendications

1. Circuit intégré (IC), comportant
un premier oscillateur (OS1), qui possède une entrée de commande de fréquence, une entrée de modulation, une entrée de commutation et une sortie des signaux,
un second oscillateur (OS2), qui possède une entrée de commande de fréquence, une entrée de modulation et une sortie des signaux,
un interrupteur commandable (GS) dont l'entrée des signaux est reliée à la sortie des signaux du second oscillateur (OS2) et qui possède une entrée de commande, un modulateur (M1), dont deux entrées de signaux sont couplées respectivement aux sorties de signaux du premier oscillateur (OS1) et de l'interrupteur commandable (GS), un commutateur commandable (US2), dont deux entrées de signaux sont reliées respectivement aux sorties de signaux du modulateur (M1) et de l'interrupteur commandable (GS), et qui possèdent une entrée de comamnde,
un diviseur commandable (FT2), dont l'entrée des signaux est reliée à la sortie des signaux du second oscillateur (OS2) et qui possède une entrée de commande pour modifier le rapport de division,
des bornes d'entrée des signaux (MO1, MO2, TF1, TF2), dont deux au moins (MO1, MO2) sont reliées respectivement aux entrées de modulation et dont deux (TF1, TF2) sont reliées respectivement aux entrées de commande de fréquence des deux oscillateurs (OS1, OS2),
des bornes de sortie des signaux (SA1 à SA4), dont respectivement l'une est reliée aux sorties de signaux du premier oscillateur (OS1), du commutateur commandable (US2) du diviseur de fréquence (FT2) et du second oscillateur (OS2), et
des bornes de commande (MOD, SE, BA), dont l'une (MOD) est reliée à l'entrée de commande du diviseur de fréquence (FT2) pour modifier le rapport de division, dont une autre (SE) est reliée à l'entrée de commande de l'interrupteur de commande (GS) et à l'entrée de commutation du premier oscillateur (OS1) et dont une autre (BA) est reliée à l'entrée de commande du commutateur commandable (OS2).

2. Circuit intégré suivant la revendication 1, caractérisé par le fait qu'en amont de l'entrée de commutation du premier oscillateur (OS1) est branchée une porte ET (UG), dont une entrée est reliée à l'entrée de commande de l'interrupteur commandé (GS) et dont l'autre entrée est reliée à l'entrée de commande du commutateur commandé (US2).

3. Circuit intégré suivant la revendication 1 ou 2, caractérisé par un autre commutateur commandable (US1), dont l'entrée des signaux est couplée à la sortie des signaux de l'interrupteur commandable (GS), dont les sorties de signaux sont reliées respectivement à une entrée de signaux du modulateur (M1) et à l'entrée de signaux du commutateur commandable déjà présent (US2) et dont l'entrée de commande est raccordée à l'entrée de commande du commutateur commandable déjà présent (US2).

4. Circuit intégré suivant la revendication 3, caractérisé par le fait que le modulateur (M1) ainsi que les deux commutateurs commandables (US1,US2) possèdent des entrées de commutation, qui sont branchées en parallèle avec l'entrée de commutation du premier oscillateur (OS1).

5. Circuit intégré suivant la revendication 3, caractérisé par le fait que le modulateur (M1) et les commutateurs commandés (US1;US2) sont remplacés par un bloc de circuit (VM), qui comporte deux transistors (T1,T2) aux émetteurs couplés, alimentés à partir d'une source de courant commandable (R3,T3),
que les collecteurs des transistors (T1,T2) sont reliés entre eux moyennant le montage intercalé respectivement d'une résistance (R1,R2) et peuvent être placés, par l'intermédiaire d'un élément de commutation commandable commun (T4), à un potentiel d'alimentation (VCC), et
qu'un potentiel d'alimentation ou un potentiel de référence d'un signal d'entrée peut être appliqué aux bases des transistors (T1,T2) par l'intermédiaire respectivement d'un autre commutateur commandable (US3,US4).
